# EUROPÄISCHE PATENTSCHRIFT

(11) **EP 2 913 176 B1**
(45) Veröffentlichungstag und Bekanntmachung des Hinweises auf die Patenterteilung: **29.11.2017**
(21) Anmeldenummer: 15150237.4
(22) Anmeldetag: 07.01.2015
(51) Int. Cl.: B29C 67/00

(54) **Vorrichtung und Verfahren zum generativen Herstellen eines Bauteils**
Apparatus and process for additive manufacturing of a work piece
Appareil et méthode de fabrication additive d'une pièce de construction

(30) Priorität: 28.02.2014 DE 102014203710
(43) Veröffentlichungstag der Anmeldung: 02.09.2015
(73) Patentinhaber: MTU Aero Engines AG, 80995 München (DE)
(72) Erfinder: Heß, Thomas, 81541 München (DE); Ladewig, Alexander, 83707 Bad Wiessee (DE); Liebl, Christian, 85461 Bockhorn (DE); Schlothauer, Steffen, 85253 Erdweg (DE); Jakimov, Andreas, 81245 München (DE); Schlick, Georg, 80809 München (DE)

(56) Entgegenhaltungen:
- EP-A1- 2 011 631
- WO-A1-2013/156119
- DE-A1-102012 014 840
- US-A1- 2009 267 269

## Beschreibung

Die vorliegende Erfindung betrifft eine Vorrichtung und ein Verfahren zum generativen Herstellen eines Bauteils, insbesondere eines Gasturbinenbauteils.
Aus der WO 2009/013751 A2 ist eine Vorrichtung zum generativen Herstellen eines Bauteils mit einem Verteilungsmittel in Form einer Rolle oder einem Schieber zum Anordnen einer Ausgangsmaterialschicht bekannt, die anschließend lokal gebunden wird, um das Bauteil schichtweise herzustellen. Um eine Kollision des Verteilungsmittels mit dem herzustellenden Bauteil während einer Bewegung des Verteilungsmittels zu erfassen, schlägt die Druckschrift einen Beschleunigungs- oder Stoßsensor an dem Verteilungsmittel vor. Die WO 2012/045660 A1 schlägt Lasersensoren zum Erfassen von Hindernissen hervor, die aus der Ausgangsmaterialschicht hervorragen.
Nachteilig erfordern bekannte Lösungen somit zusätzlichen apparativen Aufwand, wie die vorstehend genannten Beschleunigungs-, Stoß- und Lasersensoren.
Auf der anderen Seite ist es nach betriebsinternem Stand der Technik bekannt, eine Position einer das herzustellende Bauteil tragenden Plattform in einer Schichtaufbaurichtung zu erfassen und auf deren Basis ein Verstellen der Plattform zu steuern, insbesondere nach einem Verstellschritt dessen Höhe zu kontrollieren. Die WO2013/156119 zeigt ein Verfahren zum Herstellen von Bauteilen wobei Störungen der Fahrt des Beschichterschlittens oder damit verbundener Bauteile messtechnisch erfasst werden. Eine Aufgabe einer Ausführung der vorliegenden Erfindung ist es, ein generatives Herstellen eines Bauteils zu verbessern.

Diese Aufgabe wird durch die Merkmale des Anspruchs 1 bzw. 7 gelöst. Vorteilhafte Ausführungsformen der Erfindung sind Gegenstand der Unteransprüche.
In einer Ausführung der vorliegenden Erfindung werden zum generativen Herstellen eines Bauteils die Schritte:
- Anordnen einer Ausgangsmaterialschicht mittels Bewegung eines Vertei-lungsmittels;
- lokales Binden dieser Ausgangsmaterialschicht zu einem Querschnitt des herzustellenden Bauteils; und
- Verstellen einer das herzustellende Bauteil tragenden Plattform entgegen einer Schichtaufbaurichtung
mehrfach wiederholt, um das Bauteil schichtweise aus dem Ausgangsmaterial herzustellen. Entsprechend weist eine Vorrichtung nach einer Ausführung der vorliegenden Erfindung ein bewegbares Verteilungsmittel zum Anordnen einer Ausgangsmaterialschicht, ein Bindemittel zum lokalen Binden dieser Ausgangsmaterialschicht zu einem Querschnitt des herzustellenden Bauteils, und eine Plattform zum Tragen des herzustellenden Bauteils auf, die entgegen einer Schichtaufbaurichtung, insbesondere motorisch, verstellbar ist.
Das Ausgangsmaterial ist in einer Ausführung schüttgut-, insbesondere pulverartig, pastös oder flüssig, insbesondere zähflüssig. Das Verteilungsmittel weist in einer Ausführung eine Ausgangsmaterialaustrittsöffnung zum Aufbringen und/oder eine Rolle und/oder einen Schieber, insbesondere Rakel, zum Verteilen von Ausgangsmaterial auf. In einer Ausführung ist das Verteilungsmittel, insbesondere motorisch, quer zu der Schichtaufbaurichtung bewegbar bzw. wird das Verteilungsmittel, insbesondere motorisch, quer zu der Schichtaufbaurichtung bewegt, welche insbesondere, wenigstens im Wesentlichen der Gravitationsrichtung entgegengesetzt sein kann.
Die Ausgangsmaterialschicht wird in einer Ausführung lokal optisch, thermisch oder chemisch zu einem Querschnitt des herzustellenden Bauteils gebunden, insbesondere (auf)geschmolzen oder gesintert. Entsprechend weist das Bindemittel in einer Ausführung einen Laser zum Belichten und/oder Erwärmen der Ausgangsmaterialschicht auf.

Stößt das Verteilungsmittel bei seiner Bewegung zum Anordnen der Ausgangsmaterialschicht unbeabsichtigt gegen ein Hindernis, das sich in Schichtaufbaurichtung auf der Plattform abstützt, insbesondere gegen eine überstehende Struktur des herzustellenden Bauteils oder einen Fremdkörper in der Ausgangsmaterialschicht, bewegt dies die Plattform, drückt sie insbesondere entgegen der Schichtaufbaurichtung. In der vorliegenden Erfindung weist die Vorrichtung ein Positionserfassungsmittel zum Erfassen einer Schwingung der Plattform, in Schichtaufbaurichtung und vorzugsweise relativ zu dem Verteilungs- oder Bindemittel oder dessen Führung oder einer, insbesondere hierzu, ortsfesten Referenz, und ein Störungserfassungsmittel zum Erfassen, ob die Bewegung des Verteilungsmittels störungsfrei ist oder nicht, auf Basis dieser erfassten Schwingung, auf. Entsprechend wird eine Schwingung, der Plattform, in Schichtaufbaurichtung erfasst und auf Basis dieser Schwingung, der Plattform erfasst, ob die Bewegung des Verteilungsmittels störungsfrei ist oder nicht.
Stößt das Verteilungsmittel bei seiner Bewegung zum Anordnen der Ausgangsmaterialschicht unbeabsichtigt gegen ein Hindernis, das sich in Schichtaufbaurichtung auf der Plattform abstützt, insbesondere gegen eine überstehende Struktur des herzustellenden Bauteils oder einen Fremdkörper in der Ausgangsmaterialschicht, versetzt diese Kollision die Plattform in Schwingungen, insbesondere in der Schichtaufbaurichtung und/oder relativ zu dem Verteilungs- oder Bindemittel oder dessen Führung oder einer, insbesondere hierzu, ortsfesten Referenz. Durch das Erfassen einer entsprechenden Schwingung der Plattform kann somit eine Kollision des Verteilungsmittels mit dem Hindernis erfasst werden.
Nachfolgend wird eine Position(sänderung) der Plattform in Schichtaufbaurichtung relativ zu dem Verteilungs- oder Bindemittel oder dessen Führung oder einer anderen, insbesondere zu der Führung, ortsfesten Referenz ohne Beschränkung der Allgemeinheit auch kurz als Höhe(nänderung) der Plattform bezeichnet. Unter einer Positionsänderung wird vorliegend zur kompakteren Darstellung sowohl insbesondere eine Geschwindigkeit (dz/dt) oder Beschleunigung (d²z/dt²) der Plattform als auch verallgemeinernd eine, insbesondere zeitliche, Abfolge z(t) bzw. {z(t₁), z(t₂),...} von Positionen z, insbesondere also eine Schwingung der Plattform verstanden. Entsprechend kann eine Positionsänderung insbesondere durch Erfassen mehrerer Positionen zu aufeinanderfolgenden Zeitpunkten erfasst werden.
Wie einleitend erläutert, ist es nach betriebsinternem Stand der Technik bekannt, die Position der Plattform zu erfassen und auf deren Basis ein Verstellen der Plattform zu steuern, insbesondere nach einem Verstellschritt dessen Höhe zu kontrollieren.

In einer Ausführung der vorliegenden Erfindung wird auf Basis der Positionsänderung, der Plattform einerseits das Verstellen der Plattform entgegen der Schichtaufbaurichtung gesteuert, insbesondere geregelt und/oder kontrolliert, und zusätzlich auch erfasst, ob die Bewegung des Verteilungsmittels störungsfrei ist oder nicht. Entsprechend weist in einer Ausführung das Positionserfassungsmittel ein Steuermittel zum Steuern, insbesondere Regeln und/oder Kontrollieren des Verstellens der Plattform entgegen der Schichtaufbaurichtung auf Basis der erfassten Position bzw. Positionsänderung auf.
Auf diese Weise kann vorteilhaft ein bereits zum Steuern des Verstellens der Plattform vorhandenes Positionserfassungsmittel in einer zusätzlichen Funktionalität genutzt und eine Störungsfreiheit der Bewegung des Verteilungsmittels ohne zusätzlichen apparativen Aufwand, wie die einleitend erläuterten zusätzlichen Beschleunigungs-, Stoß- und Lasersensoren erfasst werden. Insbesondere, um eine Kollision möglichst frühzeitig zu erfassen und hierauf rasch reagieren zu können, wird in einer Ausführung die Position(sänderung) bereits während der Bewegung des Verteilungsmittels erfasst. Dabei hat sich eine Abtastfrequenz für die Position(sänderung) von wenigstens 0,5 kHz, insbesondere wenigstens 0,9 kHz, vorzugsweise wenigstens 5 kHz und insbesondere wenigstens 9 kHz als vorteilhaft herausgestellt, insbesondere, um eine Störung(sfreiheit) der Bewegung des Verteilungsmittels auf Basis einer Schwingung der Plattform zu erfassen.

In einer Ausführung wird die Position(sänderung) optisch durch einen optischen Abstandsmesser erfasst. Vorteilhaft kann dies den konstruktiven Aufwand und/oder Verschleiß reduzieren. In einer anderen Ausführung wird die Position(sänderung) elektrisch induktiv erfasst. Vorteilhaft kann dies die Präzision erhöhen und/oder den apparativen Aufwand reduzieren.
Eine Störung der Bewegung des Verteilungsmittels wird in einer Ausführung dann erfasst, wenn erfasst wird, dass ein von der erfassten Position(sänderung) abhängiger Parameter außerhalb eines zulässigen Bereichs ist. Dies umfasst auch ein Erfassen keiner Störung der Bewegung des Verteilungsmittels dann, wenn erfasst wird, dass ein von der erfassten Position(sänderung) abhängiger Parameter innerhalb eines unzulässigen Bereichs ist.
Der Parameter kann die Position(sänderung) selber sein. In einer Ausführung kann der Parameter eine Schwingungsamplitude und/oder -frequenz der Positionsänderung umfassen, insbesondere sein. Hierdurch kann eine präzise und rasche Kollisionserfassung zur Verfügung gestellt werden. Der (un)zulässige Parameterbereich kann insbesondere vorgebbar bzw. veränderbar sein, um vorteilhafterweise unterschiedlichen Umgebungsbedingungen, beispielsweise unterschiedlichen Prozessgeschwindigkeiten, Ausgangsmaterialien oder dergleichen angepasst werden zu können. So kann beispielsweise eine höhere Bewegungsgeschwindigkeit des Verteilungsmittels andere Schwingungsfrequenzen anregen bzw. induzieren. In einer Ausführung wird bzw. ist der (un)zulässige Parameterbereich vorab empirisch bestimmt. Hierdurch kann er in einfacher und zugleich präziser Weise vorgegeben werden bzw. sein.
In einer Ausführung wird eine Reaktion ausgelöst, wenn eine Störung der Bewegung des Verteilungsmittels erfasst wird, insbesondere eine Verlangsamung oder Unterbrechung der Bewegung des Verteilungsmittels, eine Ausweichbewegung der Plattform entgegen der Schichtaufbaurichtung und/oder das Ausgeben eines Warnsignals.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert, die einzige:

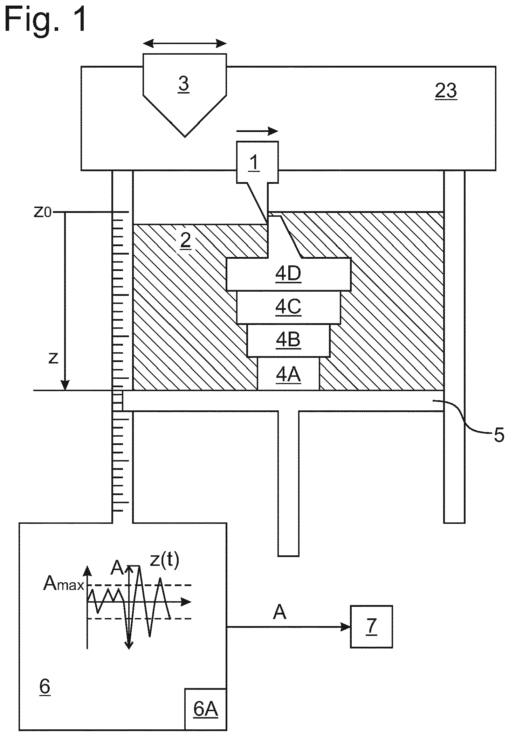

- Fig. 1: ein Erfassen einer Störung bei einem generativen Herstellen eines Bauteils nach einem Verfahren und mittels einer Vorrichtung nach einer Ausführung der vorliegenden Erfindung.

Fig. 1 zeigt eine Vorrichtung zum generativen Herstellen eines Bauteils mit einem bewegbaren Verteilungsmittel in Form eines Schiebers 1 zum Anordnen einer Ausgangsmaterialschicht 2, einem bewegbaren Bindemittel in Form eines Lasers 3 zum lokalen Binden dieser Ausgangsmaterialschicht zu einem Querschnitt 4A, 4B,... des herzustellenden Bauteils, und einer Plattform 5 zum Tragen des herzustellenden Bauteils, die entgegen einer Schichtaufbaurichtung (von unten nach oben in Fig. 1) motorisch absenkbar ist.

Die Vorrichtung weist ein Positionserfassungsmittel 6 zum Erfassen einer Positionsänderung z(t) der Position z der Plattform über der Zeit in Schichtaufbaurichtung relativ zu einer Referenz z₀, die zu einer Führung 23 des Schiebers und Lasers ortsfest ist, durch Abtasten der Position der Plattform in Schichtaufbaurichtung mit einer Abtastfrequenz von beispielsweise 1 oder 10 kHz auf. Es sei darauf hingewiesen, dass die Position(s)änderung relativ zu verschiedensten Referenzen definiert sein bzw. erfasst werden kann, wobei eine solche Referenz, wie im Ausführungsbeispiel angedeutet, vorzugsweise ortsfest gegenüber einer Führung des Verteilungs- und/oder des Bindemittels ist, insbesondere um Bewegungen der gesamten Vorrichtung gegenüber ihrer Umgebung zu kompensieren.

Das Positionserfassungsmittel weist ein Steuermittel 6A zum Regeln und/oder Kontrollieren des Absenkens der Plattform auf.

Die Vorrichtung weist weiter ein Störungserfassungsmittel 7 zum Erfassen, ob die Bewegung des Verteilungsmittels störungsfrei ist oder nicht, auf.

Das Positionserfassungsmittel erfasst während einer Bewegung des Verteilungsmittels eine Schwingungsamplitude A der Positionsänderung z(t) der Plattform und übermittelt diese an das Störungserfassungsmittel.

Kollidiert das Verteilungsmittel bei seiner Bewegung zum Anordnen der Ausgangsmaterialschicht mit einem Hindernis, wie in Fig. 1 angedeutet, beispielsweise einer überstehenden Struktur des Bauteils 4A, 4B,..., so versetzt dies die Plattform in Schwingungen in Schichtaufbaurichtung, deren Amplituden außerhalb eines empirisch bestimmten, einstellbaren zulässigen Bereichs [0; Aₘₐₓ] liegen.

Entsprechend erfasst in diesem Fall das Störungserfassungsmittel, dass die Bewegung des Verteilungsmittels nicht (mehr) störungsfrei ist, und löst eine Reaktion aus, beispielsweise ein weiteres Absenken der Plattform, eine Verlangsamung oder Unterbrechung der Bewegung des Verteilungsmittels und/oder ein Warnsignal; eventuell kann auch eine Wiederholung des Verteilungsvorganges ausgelöst werden.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Schieber (Verteilungsmittel)
- 2: Ausgangsmaterialschicht
- 3: Laser (Bindemittel)
- 4A, 4B,...: Querschnitt des herzustellenden Bauteils
- 5: Plattform
- 6: Positionserfassungsmittel
- 6A: Steuermittel
- 7: Störungserfassungsmittel
- 23: Führung

## Patentansprüche

1. Verfahren zum generativen Herstellen eines Bauteils (4A, 4B,...), wobei die Schritte:
- Anordnen einer Ausgangsmaterialschicht (2) mittels Bewegung eines Verteilungsmittels (1);
- lokales Binden (3) dieser Ausgangsmaterialschicht zu einem Querschnitt (4A, 4B,...) des herzustellenden Bauteils; und
- Verstellen einer das herzustellende Bauteil tragenden Plattform (5) entgegen einer Schichtaufbaurichtung;
mehrfach wiederholt werden, um das Bauteil schichtweise aus dem Ausgangsmaterial herzustellen;
**dadurch gekennzeichnet, dass**
auf Basis einer erfassten Schwingung (z(t)) als Positionsänderung der Plattform in Schichtaufbaurichtung erfasst wird ob die Bewegung des Verteilungsmittels störungsfrei ist oder nicht, wobei die Positionsänderung
- optisch durch einen optischen Abstandsmesser und/oder
- elektrisch induktiv erfasst wird.

2. Verfahren nach Anspruch 1, **dadurch gekennzeichnet, dass** die Positionsänderung während der Bewegung des Verteilungsmittels erfasst wird.

3. Verfahren nach einem der vorhergehenden Ansprüche, **dadurch gekennzeichnet, dass** die Positionsänderung mit einer Abtastfrequenz von wenigstens 0,5 kHz erfasst wird.

4. Verfahren nach einem der vorhergehenden Ansprüche, **dadurch gekennzeichnet, dass** eine Störung der Bewegung des Verteilungsmittels erfasst wird, wenn erfasst wird, dass eine von der erfassten Positionsänderung abhängige Schwingungsamplitude (A) und/oder -frequenz, außerhalb eines vorgebbaren und/oder vorab empirisch bestimmten zulässigen Bereichs ([0; Aₘₐₓ]) ist.

5. Verfahren nach einem der vorhergehenden Ansprüche, **dadurch gekennzeichnet, dass** eine Unterbrechung oder Verlangsamung der Bewegung, ein Verstellen der Plattform und/oder ein Ausgeben eines Warnsignals, ausgelöst wird, wenn eine Störung der Bewegung des Verteilungsmittels erfasst wird.

6. Verfahren nach einem der vorhergehenden Ansprüche, **dadurch gekennzeichnet, dass** das Verstellen der Plattform entgegen der Schichtaufbaurichtung auf Basis der erfassten Positionsänderung gesteuert, geregelt und/oder kontrolliert, wird.

7. Vorrichtung zum generativen Herstellen eines Bauteils (4A, 4B,...) mittels eines Verfahrens nach einem der vorhergehenden Ansprüche, mit:
- einem bewegbaren Verteilungsmittel (1) zum Anordnen einer Ausgangsmaterialschicht (2);
- einem Bindemittel, insbesondere einem Laser (3), zum lokalen Binden dieser Ausgangsmaterialschicht zu einem Querschnitt (4A, 4B,...) des herzustellenden Bauteils; und
- einer Plattform (5) zum Tragen des herzustellenden Bauteils, die entgegen einer Schichtaufbaurichtung, insbesondere motorisch, verstellbar ist;
**gekennzeichnet durch**
ein Positionserfassungsmittel (6) zum Erfassen einer Schwingung (z(t)) als Positionsänderung der Plattform in Schichtaufbaurichtung; und
einem Störungserfassungsmittel (7) zum Erfassen, ob die Bewegung des Verteilungsmittels störungsfrei ist oder nicht, auf Basis der erfassten Positionsänderung, wobei das Positionserfassungsmittel derart eingerichtet ist, dass es
- optisch durch einen optischen Abstandsmesser und/oder
- elektrisch induktiv erfasst wird.

8. Vorrichtung nach Anspruch 7, **dadurch gekennzeichnet, dass** das Positionserfassungsmittel zum Erfassen der Positionsänderung während der Bewegung des Verteilungsmittels eingerichtet ist.

9. Vorrichtung nach einem der vorhergehenden Ansprüche 7 und 8, **dadurch gekennzeichnet, dass** das Positionserfassungsmittel zum Erfassen der Positionsänderung mit einer Abtastfrequenz von wenigstens 0,5 kHz eingerichtet ist.

10. Vorrichtung nach einem der vorhergehenden Ansprüche 7 bis 9, **dadurch gekennzeichnet, dass** das Störungserfassungsmittel dazu eingerichtet ist, eine Störung der Bewegung des Verteilungsmittels zu erfassen, wenn erfasst wird, dass eine von der erfassten Positionsänderung abhängige Schwingungsamplitude (A) und/oderfrequenz, außerhalb eines vorgebbaren und/oder vorab empirisch bestimmten zulässigen Bereichs ([0; Aₘₐₓ]) ist.

11. Vorrichtung nach einem der vorhergehenden Ansprüche 7 bis 10, **dadurch gekennzeichnet, dass** das Störungserfassungsmittel dazu eingerichtet ist, eine Unterbrechung oder Verlangsamung der Bewegung, ein Verstellen der Plattform und/oder ein Ausgeben eines Warnsignals, auszulösen, wenn eine Störung der Bewegung des Verteilungsmittels erfasst wird.

12. Vorrichtung nach einem der vorhergehenden Ansprüche 7 bis 11, **dadurch gekennzeichnet, dass** das Positionserfassungsmittel ein Steuermittel (6A) zum Steuern, insbesondere Regeln und/oder Kontrollieren des Verstellens der Plattform entgegen der Schichtaufbaurichtung auf Basis der erfassten Position bzw. Positionsänderung aufweist.

## Claims

1. A method for additive manufacturing of a work piece (4A, 4B,...), wherein the steps:
- positioning of a starting material layer (2) by moving a distribution means (1);
- local bonding (3) of said starting material layer to form a cross-section (4A, 4B,...) of the work piece to be manufactured; and
- displacing a platform (5) supporting the work piece to be manufactured against a layer building direction;
are repeated multiple times, in order to manufacture the work piece, layer by layer, from the starting material;
**characterized in that**,
based on a detected oscillation (z(t)) as a change in position of the platform in the layer building direction, it is determined, if the motion of the distribution means is unperturbed or not,
wherein the change in position is detected
- optically, by means of an optical distance meter and/or
- by electrical induction.

2. The method of claim 1, **characterized in that** the change in position during the motion of the distribution means is detected.

3. The method according to any of the preceding claims, **characterized in that** the change in position is detected with a sampling frequency of at least 0.5 kHz.

4. The method according to any of the preceding claims, **characterized in that** a perturbation in the motion of the distribution means is detected, if it is detected that an oscillation amplitude (A) and/or frequency depending on the detected change in position lies outside of a predeterminable and/or previously empirically determined admissible range ([0; Aₘₐₓ]).

5. The method according to any of the preceding claims, **characterized in that** an interruption or deceleration of motion, a displacement of the platform and/or the output of an alarm signal is activated if a perturbation of the motion of the distribution means is detected.

6. The method according to any of the preceding claims, **characterized in that** the displacement of the platform against the layer building direction is controlled, adjusted and/or monitored based on the detected change in position.

7. An apparatus for additive manufacturing of a work piece (4A, 4B,...) by means of a method according to any of the preceding claims, with:
- a movable distribution means (1) for positioning a starting material layer (2);
- a bonding means, in particular a laser (3) for locally binding said starting material layer to form a cross-section (4A, 4B,...) of the work piece to be manufactured; and
- a platform (5) for supporting the workpiece to be manufactured, which is displaceable against a layer building direction, in particular by using motors;
**characterized by**
a position detecting means (6) for detecting an oscillation (z(t)) as
a change in position of platform in the layer building direction; and
a perturbation detecting means (7) for determining, if the motion of the distribution means is unperturbed or not, based on the detected change in position, wherein the position detection means are adapted to detected the same by
- optical detection by means of an optical distance meter and/or
- electrical induction.

8. The apparatus according to claim 7, **characterized in that** the position detecting means is adapted for detecting the change in position during the motion of the distribution means.

9. The apparatus according to any of the preceding claims 7 and 8, **characterized in that** the position detecting means is adapted for detecting the change in position with a sampling frequency of at least 0.5 kHz.

10. The apparatus according to any of the preceding claims 7 to 9, **characterized in that** the perturbation detecting means is adapted for detecting a perturbation in the motion of the distribution means, when it detects that an oscillation amplitude (A) and/or frequency depending on the change in position lies outside a predeterminable and/or previously empirically determined permissible range ([0; Aₘₐₓ]).

11. The apparatus according to any of the preceding claims 7 to 10, **characterized in that** the perturbation detecting means is adapted for activating an interruption or deceleration of motion, a displacement of platform and/or outputting of an alarm signal, if a perturbation of motion of the distribution means is detected.

12. The apparatus according to any of the preceding claims 7 to 11, **characterized in that** the position detecting means has a control means (6A) for controlling, in particular, for adjusting and/or monitoring, the displacement of the platform against the layer building direction, based on the detected position or change in position.

## Revendications

1. Procédé de fabrication générative d'un composant (4A, 4B, ...), les étapes suivantes :
- la disposition d'une couche de matière de départ (2) par déplacement d'un moyen de distribution (1) ;
- la liaison locale (3) de cette couche de matière de départ à une section transversale (4A, 4B, ...) du composant à fabriquer ; et
- le déplacement d'une plate-forme (5), portant le composant à fabriquer, dans le sens opposé au sens de dépôt de couche ;
étant répétées plusieurs fois pour fabriquer le composant couche par couche à partir de la matière de départ ;
**caractérisé en ce que** l'on détecte, en se fondant sur une oscillation détectée (z(t) en tant que variation de position de la plate-forme dans le sens de dépôt de couche, si le déplacement du moyen de distribution se fait ou non sans perturbation,
la variation de position étant détectée
- optiquement par un télémètre optique et/ou
- électriquement par induction.

2. Procédé selon la revendication 1, **caractérisé en ce que** la variation de position de distribution est détectée pendant le déplacement du moyen.

3. Procédé selon l'une des revendications précédentes, **caractérisé en ce que** la variation de position est détectée avec une fréquence de balayage d'au moins 0,5 kHz.

4. Procédé selon l'une des revendications précédentes, **caractérisé en ce que** l'on détecte une perturbation du déplacement du moyen de distribution si l'on détecte qu'une amplitude d'oscillation (A) et/ou la fréquence, qui dépend de la variation de position, se trouve à l'extérieur d'une zone autorisée ([0 ; Aₘₐₓ]) prédéterminable et/ou préalablement déterminée par voie empirique.

5. Procédé selon l'une des revendications précédentes, **caractérisé en ce qu'**une interruption ou une décélération du mouvement, un déplacement de la plate-forme et/ou l'émission d'un signal d'alarme est déclenché lorsque l'on détecte une perturbation du mouvement du moyen de distribution.

6. Procédé selon l'une des revendications précédentes, **caractérisés en ce que** le déplacement de la plate-forme dans le sens opposé au sens de dépôt de couche est commande, réglé et/ou contrôlé sur la base de la variation de position détectée.

7. Dispositif de fabrication générative d'un composant (4A, 4B, ...) à l'aide d'un procédé selon l'une des revendications précédentes, comprenant :
- un moyen de distribution mobile (1) destiné à disposer une couche de matière de départ (2) ;
- un moyen de liaison, en particulier un laser (3) destiné à lier localement cette couche de matière de départ à une section transversale (4A, 4B, ...) du composant à fabriquer ; et
- une plate-forme (5) destinée à supporter le composant à fabriquer et pouvant être déplacé, en particulier de façon motorisée, dans le sens opposé au sens de dépôt de couche ; **caractérisé par**
un moyen de détection de position (6) destiné à détecter une oscillation (z(t)), en tant que variation de position, de la plate-forme dans le sens de dépôt de couche ; et
un moyen de détection de perturbation (7) destiné à détecter si le mouvement du moyen de distribution est effectué ou non sans perturbation sur la base de la variation de position détectée,
le moyen de détection de position étant adapté pour être détecté
- optiquement par un télémètre optique et/ou
- électriquement par induction.

8. Dispositif selon la revendication 7, **caractérisé en ce que** le moyen de détection de position est adapté pour détecter la variation de position pendant le déplacement du moyen de distribution.

9. Dispositif selon l'une des revendications précédentes 7 et 6, **caractérisé en ce que** le moyen de détection de position est adapté pour détecter la variation de position avec une fréquence de balayage d'au moins 0,5 kHz.

10. Dispositif selon l'une des revendications précédentes 7 à 9, **caractérisé en ce que** le moyen de détection de perturbation est adapté pour détecter une perturbation du mouvement du moyen de distribution si l'on détecte qu'une amplitude d'oscillation (A) et/ou la fréquence, qui dépend de la variation de position, se trouve à l'extérieur d'une zone autorisée ([0 ; Aₘₐₓ]) prédéterminable et/ou préalablement déterminée par voie empirique.

11. Dispositif selon l'une des revendications précédentes 7 à 10, **caractérisé en ce que** le moyen de détection de perturbation est adapté pour déclencher une interruption ou une décélération du mouvement, un déplacement de la plate-forme et/ou l'émission d'un signal d'alarme est déclenché lorsque l'on détecte une perturbation du mouvement du moyen de distribution.

12. Dispositif selon l'une des revendications précédentes 7 à 11, **caractérisé, en ce que** le moyen de détection de position comprend un moyen de commande (6A) destiné à commander, en particulier régler et/ou contrôler, le déplacement de la plate-forme dans le sens inverse de dépôt de couche sur la base de la position ou variation de position détectée.
